# EUROPEAN PATENT APPLICATION

(11) **EP 4 438 416 A1**
(43) Date of publication of application: **02.10.2024**
(21) Application number: 23164798.3
(22) Date of filing: 28.03.2023
(51) Int. Cl.: B60R 16/037

(54) **METHOD AND SYSTEM TO PROVIDE A USER-SPECIFIC USER INTERFACE IN A VEHICLE**

(71) Applicant: CARIAD SE, 38440 Wolfsburg (DE)
(72) Inventor: MARIMUTHU, Prasanna, 44793 Bochum (DE)
(74) Representative: Hofstetter, Schurack & Partner

(57) **Abstract**

The invention relates to a method and a system to provide a user-specific user interface in a vehicle (2, 3). By an external computing device (4): receiving (S3) a first user interface information (10) describing at least one design feature (11) of a first user interface provided to a user (15) in a first vehicle (2); storing (S4) it in a user account (14) of the user (15); receiving (S6) a request information (18) for a user interface information (10, 20) for a second user interface in a second vehicle (3) wherein both user interface differ so that the first user interface information (10) is unsuitable for the second user interface; creating (S7) a second user interface information (20) that describes the at least one design feature (11) and is adapted to the second user interface; providing (S8) the created second user interface information (20) to the second vehicle (3).

## Description

The invention relates to a method to provide a user-specific user interface in a vehicle. The inventive method is performed by an external computing device. The invention furthermore relates to a system to provide a user-specific user interface in a vehicle. The system comprises a first vehicle, a second vehicle and an external computing device.

A vehicle may provide at least one function and/or service that comprises a presentation of information to a user in the vehicle. This presentation may be specific for the vehicle and/or a display device in the vehicle. Besides, the presentation may depend on settings of the user. The presentation is typically characterized by at least one design feature that has, for example, a particular recognition effect. The design feature is, for example, a color and/or a layout used on the display device. Furthermore, the user may be used to having access to user-specific data in the vehicle, such as music and/or other multimedia content, and/or to an automatic implementation of user-specific settings regarding the vehicle, for example, an automatic adjustment of a seat in the vehicle and/or side mirrors of the vehicle. When driving the vehicle, the user experiences thus the comfort of a familiar environment. This familiar environment may be referred to as a user-specific user interface provided by the vehicle.

However, there are situations in which the user may switch the vehicle for another vehicle, for example, for new or a rental vehicle. The other vehicle may be of another model and/or from another manufacturer than the old vehicle. Therefore, the user may be confronted with at least one different design feature, and in particular with no access to the user-specific data and/or the user-specific setting. In such a situation, it may be difficult for the user to adapt to the new environment in the vehicle.

There are methods to transfer personal vehicle settings from one vehicle to another vehicle.

DE 10 2015 201 448 A1 discloses a method and a device to provide transferable personal vehicle settings.

WO 2005/068259 A1 discloses the transfer of at least one personal vehicle setting of a first vehicle to a second vehicle, especially for a driver changing vehicles.

These methods assume that the vehicle that receives information from the other vehicle is configured to adapt the received information to its own technical equipment. However, this requires resources in the receiving vehicle for this adaptation.

It is the object of the invention to improve providing a user-specific environment in a vehicle.

The independent claims solve the object.

The invention is based on the observation that it may be important for a user of a vehicle to be surrounded by at least one familiar function and/or service when he or she enters a vehicle regardless of whether he or she has previously entered the vehicle or not. The familiar function and/or service is easily recognizable if it comprises, for example, a design feature displayed in the vehicle. If, for example, the design feature from a first vehicle of the user is maintained in a second vehicle, the user may feel an easy and smooth transition when switching vehicles from the first vehicle to the second vehicle. Therefore, a user interface specific to the user from the first vehicle should be available in the second vehicle.

A first aspect of the invention relates to a method to provide a user-specific user interface in a vehicle. A user interface in the sense of the invention may comprise a user-specific function and/or service provided in the vehicle. The user interface comprises a display on a graphical user interface and hence on a display device in the vehicle. However, the interface may as well comprise further user-specific information that is not related to the graphical user interface but, for example, settings and/or available data.

An external computing device performs the inventive method. The external computing device is located outside the vehicle. It is, for example, a cloud server, a server, a backend and/or another computer that is not located in the vehicle.

The method comprises receiving a first user interface information. The first user interface information describes at least one design feature of a first user interface provided to a user in a first vehicle. The design feature may, for example, comprise details on a design of a display or output on a display device. The design feature may be visible on the display device when the vehicle is activated and/or when the display device is activated. The design feature may depend on the first vehicle, for example on a model and/or manufacturer of the first vehicle. The first user interface information may be transmitted by the first vehicle and is then received by the external computing device.

The method comprises storing the received first user interface information in a user account of the user. The user account may comprise additional data describing the user, such as, for example, a name, an identification feature and/or details on a user subscription to a service in the vehicle and/or provided by the vehicle. The user account may comprise an information about the user collected during he or she was driving the vehicle. The external computing device comprises a storage unit. In that storage unit the user account is stored. The external computing device adds the received first user interface information to the stored user account.

The method comprises receiving a request information. The request information describes a user-specific request for a user interface information for a second user interface in a second vehicle. The second user interface differs from the first user interface so that the first user interface information is unsuitable for the second user interface. This is, for example, the case if the second vehicle differs from the first vehicle regarding the model and/or manufacturer. Besides, both vehicle may be of a common model and/or manufacturer but comprise different display devices, for example due to differences in vehicle equipment. It is therefore possible that the typical design used on the respective display device and hence on the respective graphical user interface in the first vehicle and in the second vehicle may deviate from each other significantly, for example, in color. However, the second vehicle is not informed about the first user interface and therefore may transmit the request information to ask for details and hence a user interface information.

There may be a time difference between receiving and storing the first user interface information and receiving the request information. However, the user for whom the external computing receives the request information is the same user for whom the external computing device received and stored the first user interface information. Therefore, the first user interface information as well as the request information may comprise at least one identification information that allows to allocate or assign the request information and the first user interface information to the user and his or her user account. The identification information may be a combination of numbers and/or letters, which is assigned to the user profile.

After storing the received first user interface information and receiving the request information, the method comprises creating a second user interface information. Therefore, the external computing device applies a user interface information creation algorithm on the stored first user interface information and the request information. The second user interface information describes the at least one design feature according to the stored first user interface information and is adapted to the second user interface. This means that the external computing device creates a specific information for the second vehicle that comprises all the information necessary for the second vehicle to mimic by its display device the at least one design feature and hence the display on the display device in the first vehicle. Based on the created second user interface information the second vehicle may provide a display on its display device that resembles the display on the display device in the first vehicle. This is because of the adaptation to the second user interface.

The user interface information creation algorithm comprises at least one rule that may be executed or applied by the external computing device to determine the second user interface information. The user interface information creation algorithm is a software or at least a part of a software. At least creating the second user interface information is a part of the invention method that is computer implemented. The request information typically describes or comprises details on the second user interface and the second vehicle so that it specifies, for example, technical requirements that have to be met by the second user interface information so that the second user interface may use the provided second user interface information to provide the display that resembles the display in the first vehicle. Therefore, applying the interface information creation algorithm on both the first user interface information that comprises at least the design feature that requires adapting and the request information allows to create and thus determine the second user interface information.

The method comprises providing the created second user interface information to the second vehicle. Therefore, the external computing device may transmit the second user interface information to the second vehicle. Then, the second vehicle may operate its display device according to the at least one design feature of the first user interface. For example, the design feature may be adapted to a display device size in case the display devices of the two vehicles differ in size. Adaptation to other technical specifications of the respective display device and hence of the respective user interface are possible.

As a result, the user may experience the same user interface and hence environment in both vehicles. The adaption to the second user interface is completely performed by the external computing device so that no computational power or energy capacity of the vehicles is required to perform the main step of the method for creating the second user interface information. Thus, the method improves providing a user-specific environment in a vehicle. Moreover, the methos allows adaption of the first user interface information to any other second vehicle for which the request information is received by the external computing device.

However, the user interface may comprise more than design features for the graphical user interface, for example, user-specific data and/or user-specific settings.

Thus, a preferred embodiment comprises that the first user interface information describes at least one user-specific setting for at least one function of the vehicle and/or for at least one service of the vehicle. Alternatively or additionally, the first user interface information describes user-specific data stored in the first vehicle. The setting may relate to an automated seat adjustment and/or an automated mirror adjustment of at least one mirror of the vehicle, and/or a preference for settings of an air conditioning and/or multimedia system of the vehicle. Besides such comfort function, the setting may relate to a preferred driving mode and/or a location dependent automatic activation of a function and/or service in the vehicle. The service may be, for example, an access to a subscription for improved traffic information and/or weather information in the vehicle. The user-specific data may be multimedia data, such as music stored in the vehicle that is provided by a music streaming service. The user-specific data may as well be further information on a typical user behavior and hence, for example, on user-specific vehicle functions. The listed examples are not conclusively. Other user-specific settings and/or user-specific data are possible.

The created second user interface information comprises the at least one user-specific setting and/or user-specific data adapted to the second user interface. This means that the method is not only applicable to adapt a certain design feature of the first user interface to the second user interface, but also to add, for example, user-specific settings and/or user-specific data and hence more details on user preferences to the second user interface information to provide it to the second vehicle. As a result in the second vehicle, the user may have access to his favorite music from the music streaming service, benefit from the automated adjustment of his or her seat in the second vehicle and/or other personalized vehicle features of the first vehicle. The method is hence particularly comfortable for the user. However, if the second vehicle, for example, does not comprise means for an automated adjustment of the seat and/or the other personalized vehicle features, the second user interface information may not comprise the respective user-specific setting and/or user-specific data. In this case, the request information may specify the technical prerequisites of the second vehicle. Therefore, the second user interface information may only comprise the user-specific setting and/or user-specific data that is adapted to the second user interface if such an adaptation is possible according to the technical prerequisites of the second vehicle.

Another embodiment comprises that the at least one design feature describes a font, a color, a symbol and/or a position of at least one object on a display of the respective user interface. Hence, a design experience the user knows from the first vehicle is adapted to the design experience the user may experience in the second vehicle. The position of the at least one object may be, for example, an arrangement of different pieces of information on the display, for example, where a map is displayed and where additional text is displayed. The display is here the output shown on the display device. The display device may comprise a screen, such as a touchscreen. The display device may be a head-up display and/or any other kind of display in the vehicle.

Another embodiment comprises that the user interface information generation algorithm comprises at least one emulator and at least one graphical engine. Therefore, it may first create a generalized version of the information described by the first user interface information and then translate this generalized version into a translated version that matches the requirements of the second user interface. The emulator is here a software or a part of a software that enables the external computing device to create the content described by the second user interface information, whereas the graphical engine is a software or a part of a software that creates a visual representation of the content in the second vehicle. For example, the graphical engine translates the at least one design feature to a design feature that may be displayed by the second user interface. Known emulators and/or graphical engines may be used. This explains how a reliable second user interface information is created.

For use cases or use situations which may arise in the method and which are not explicitly described here, it may be provided that, in accordance with the method, an error message and/or a prompt for user feedback is output and/or a default settings and/or a predetermined initial state is set.

A further aspect of the invention relates to a system to provide a user-specific user interface in a vehicle. The system comprises a first vehicle, a second vehicle and an external computing device. The external computing device is configured to receive a first user interface information describing at least one design feature of a first user interface provided to a user in the first vehicle. The external computing device is configured to store the received first user interface information in a user account of the user. Besides, the external computing device is configured to receive a request information describing a user-specific request for a user interface information for a second user interface in the second vehicle. The second user interface differs from the first user interface so that the first user interface information is unsuitable for the second user interface. The external computing device is configured to create a second user interface information that describes the at least one design feature according to the stored first user interface information adapted to the second user interface. This is done by applying a user interface information creation algorithm on the stored first user interface information and the request information. The external computing device is configured to provide the created second user interface information to the second vehicle.

A preferred embodiment of the inventive system comprises that the first vehicle is configured to determine the first user interface information by applying a user interface determination algorithm on current user interface settings, which are in particular set by the user. This means that the first vehicle may at first create the first user interface information based on its knowledge of the first user interface. For example, the design feature is comprised by and/or a result of user interface settings which are manually provided, for example, by the user. Alternatively or additionally, the first user interface information may correspond to original settings in the first vehicle. The user interface information creation algorithm comprises at least one rule that allows the first vehicle to extract, for example, the at least one design feature from the user interface settings in the first vehicle and, for example, incorporate or generalize it or them, respectively. As a result, the first user interface information only describes the at least one design feature and the at least one user-specific setting and/or the at least one user-specific data as it is provided in the first vehicle.

According to a further embodiment, the first vehicle is configured to transmit the determined first user interface information to the external computing device via a communication connection between the first vehicle and the external computing device. This communication connection is preferably wireless, for example, via a wireless local area network (WLAN), a Bluetooth connection and/or a mobile data network, for example based on the mobile communications standard Long Term Evolution (LTE), Long Term Evolution Advanced (LTE-A), Fifth Generation (5G) or Sixth Generation (6G). This allows a good and reliable transfer of the first user interface information to the external computing device.

Besides, another embodiment of the inventive system comprises that the external computing device is configured to provide the created second user interface information by transmitting it to the second vehicle via a communication connection between the external computing device and the second vehicle. To provide the second user interface information to the second vehicle it is sent to it via the wireless communication connection. The communication connection between the external computing device and the second vehicle may be equivalent or similar to the communication connection between the external computing device and the first vehicle. The communication connection may be based on vehicle-to-infrastructure communication. Therefore, the second vehicle may receive the second user interface information and use it to run the second vehicle interface.

Furthermore, another embodiment of the inventive system comprises that the second vehicle is configured to create a display on a display device of the second vehicle that comprises the at least one design feature by processing the provided second user interface information. After receiving the second user interface information, the second vehicle hence adapts the display or creates the display for the display device based on the at least one designed feature according to the second user interface information. Therefore, for example, the output of the graphical user interface as the display device in the second vehicle is now adapted to the respective output from the first vehicle. For example, the font, the color, the shape and/or type of a symbol and/or the position of at least one displayed object on the display device is now adapted to the respective design from the first vehicle. As a result, the graphical user interface looks like the one the user already knows from the first vehicle. This is particularly comfortable for the user.

Another embodiment of the inventive system comprises that the second vehicle is configured to transmit the request information to the external computing device automatically after identifying the user in the second vehicle and/or in response to a manual activation. Identifying the user may be based on a cabin camera in combination with a face recognition algorithm, a personalized key and/or a detection of a personalized mobile device, such as a smartphone and/or a tablet, in the vehicle. As soon as the user is identified in the second vehicle, the second vehicle sends the request information to the external computing device so that it may be verifies if there is a user account for the identified user or not. Alternatively or additionally, the second vehicle may provide a manual transmitting of the request information by operating a respective operating element in the second vehicle. The operating element may be a knob, a touch screen, a button, a rotary push button and/or a key. It is hence possible to automatically or to manually activate the request for the second user interface information in the second vehicle. This is particularly comfortable for the user.

The invention also includes further embodiments of the system according to the invention which have features as already described in connection with the further embodiments of the method according to the invention, or vice versa.

The invention also comprises the external computing device. The external computing device may have a data processing device or a processor device which is set up to carry out the computer implemented steps of the inventive method. For this purpose, the processor device may comprise at least one microprocessor and/or at least one microcontroller and/or at least one FPGA (Field Programmable Gate Array) and/or at least one DSP (Digital Signal Processor). Furthermore, the processor device may comprise program code which is arranged to perform the embodiment of the method according to the invention when executed by the processor device. The program code may be stored in a data memory of the processor device. The processor device may be based, for example, on at least one circuit board and/or on at least one SoC (system on chip).

The vehicles mentioned above are preferably motor vehicle, in particular a respective passenger car, truck, passenger bus and/or motorcycle.

As a further solution, the invention also comprises a computer-readable storage medium comprising program code which, when executed by a computer or computer network, such as the system, causes the computer or computer network to execute an embodiment of the inventive method. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called appstore server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also comprises combinations of the features of the described embodiments. Thus, the invention also comprises realizations each comprising a combination of the features of more than one of the described embodiments, provided that the embodiments have not been described as mutually exclusive.

In the following an exemplary implementation of the invention is described. The figure shows:
Fig. a schematic representation of a system and a method to provide a user-specific user interface in a vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

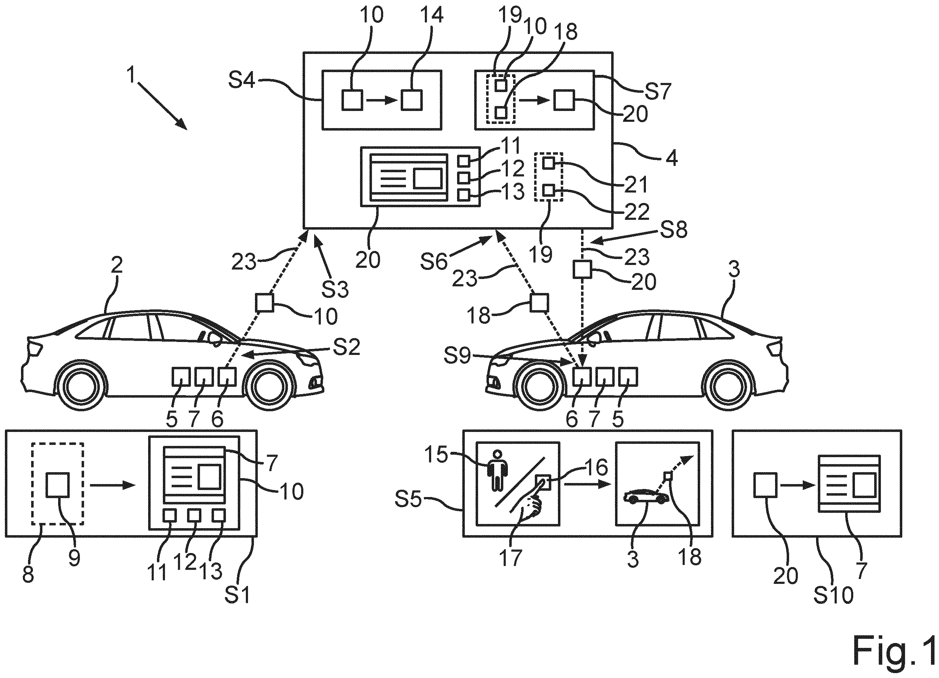

Fig. 1 shows a system 1 that comprises a first vehicle 2, a second vehicle 3 and an external computing device 4. The first vehicle 2 and the second vehicle 3 differ from one another.

Each vehicle 2, 3 may comprise a control unit, a communication interface 6 and a display device 7. In the vehicle 2, 3, a user interface is available that may comprise a graphical user interface and hence a display on the respective display device 7. The display device 7 may be the graphical user interface.

The system 1 performs a method. In a step S1, the first vehicle 2 may determine a first user interface information 10 by applying a user interface determination algorithm 8 on current user interface settings 9. The current user interface settings 9 are in particular set by a user 15. The current user interface settings 9 are stored in the first vehicle 2. The hereby created first user interface information 10 describes at least one design feature 11 of a first user interface provided to the user 15 in the first vehicle 2.

Alternatively or additionally, the first user interface information 10 may provide at least one user-specific setting 12 for at least one function and/or service of the first vehicle 2 and/or user-specific data 13 stored in the first vehicle 2. The at least one design feature 11 describes, for example, a font, a color, a symbol and/or a position of at least one object on a display of the respective user interface. The display (or output) is preferably displayed on the display device 7 of the respective vehicle 2, 3. Here, it is, for example, the design feature 11 that an image is always on the right side to a text representation. Alternative or additional design features are possible.

In a step S2, the first vehicle 2 may transmit the determined first user interface information 10 to the external computing device 4. This may be achieved via a communication connection 23 between the first vehicle 2 and the external computing device 4. The communication connection 23 is, for example, based on vehicle-to-infrastructure communication.

In a step S3, the external computing device 4 receives the first user interface information 10 from the first vehicle 2. In a step S4, the external computing device 4 stores the received first user interface information in a user account 14 of the user 15. Therefore, the external computing device 4 may comprise a storage unit.

A step S5 may be performed by the second vehicle 3. The step S5 may comprise transmitting a request information 18 to the external computing device 4. This may occur automatically after identifying the user 15 in the second vehicle 3. Alternatively or additionally, the second vehicle 3 may transmit the request information 18 in response to a manual activation. The manual activation may be operating an operating element 16 in the second vehicle 3 with a hand 17 of the user 15. The user 15 in the second vehicle is always the user 15 with the user account 14 with the stored first user interface information 10. The request information 18 is preferably transmitted to the external computing device 4 via a communication connection 23 between the second vehicle 3 and the external computing device 4.

A step S6 performed by the external computing device 4 comprises receiving the request information 18. The request information 18 describes a user-specific request for a user interface information 10, 20 for a second user interface in the second vehicle 3. The second user interface differs from the first user interface so that the first user interface information 10 is unsuitable for the second user interface.

The external computing device 4 then performs a step S7 that comprises creating a second user interface information 20. The second user interface information 20 describes the at least one design feature 11 according to the stored first user interface information 10 adapted to the second user interface. The second user interface information 20 is created by applying a user interface information creation algorithm 19 on the stored first user interface information 10 and the received request information 18. If the first user interface information 10 also comprises the at least one user-specific setting 12 and/or the user-specific data 13, the created second user interface information 20 comprises the at least one user-specific setting 12 and/or user-specific data 13 adapted to the second user interface. However, it may only comprise the at least one adapted user-specific setting 12 and/or adapted user-specific data if the second vehicle 2 and in particular the second user interface comprises the means for implementing such settings and/or data. If, for example, the user-specific settings 12 comprise an automated adjustment of a seat in a vehicle 2, 3, whereas the second vehicle 3 and hence the second user interface does not comprise the technical means to perform an automated adjustment of seats, such a user-specific setting 12 may be left out from the second user interface information 20 or may be disabled and/or marked as a not available setting. It is assumed that the request information 18 comprises all necessary information for the external computing device 4 to perform the described adaptation to the second user interface.

The user interface information creation algorithm 19 used in step S7, may comprise at least one emulator 21 and at least one graphical engine 22.

A step S8 performed by the external computing device 4 comprises providing the created second user interface information 20 to the second vehicle 3. Therefore, it is possible that the external computing device 4 transmits the second user interface information 20 via a communication connection 23 to the second vehicle 3. In a step S9, the second vehicle 3 may receive the provided second user interface information 20.

All the communication connections 23 mentioned are based on the fact that the vehicles 2, 3 each comprise the communication interface 6 and that the external computing device 4 as well comprises means for receiving and/or sending information.

The first user interface information 10 and the second user interface information 20 may alternatively be referred to as first user interface data and/or second user interface data 20, respectively.

In a step S10 performed in the second vehicle 3, the second vehicle 3 may create a display on its display device 7 that comprises the at least one design feature 11. As a result, the display on the display device 7 may look exactly like the respective display in the first vehicle 2. This may concern the font, color, the symbol and/or the position of the at least one object on the display that is displayed on the display device 7. This is visualized here by the identically looking display in the second vehicles.

In summary, the invention relates to retaining a user interface and preferences across different vehicle models. The infotainment system in a vehicle 2, 3 allows the user 15 to create driver profile (user profile) which will include their preference such as temperature, Bluetooth devices, seat height adjustment, favorite locations, driving mode, linked music platform accounts and much more. These preference are created based on the settings which they feed in their user interface. In this case, even if we have some platform to retrieve user preferences, it will be complex for the users to change the settings based on the hardware of the second vehicle 3 since the user interface is different. This is due to the strategy of manufacturer to provide unique experience for their drivers. But if an user 15 is switching the vehicle 2, 3 for a short period of time in the event of car leasing or car renting, then it will be hard for the user 15 to adapt to the new vehicle 2,3. Thus, in this case, it becomes critical to take both preferred user interface and user preferences so that drivers who are switching vehicles 2, 3 in short period of time will find smooth transition in switching vehicles 2, 3.

Users 15 create driver profiles based on their preference. Users 15 login into the application to export their driver profile. The meta data of the driver and their preference is uniquely identified on the portal placed in the cloud computing level. When the user switches vehicle 2, 3, the user logins in to the same application to enable the graphical user interface (GUI) from theirs preferred car. At the same time, the preferences are still retained in the new vehicle 2, 3.

For example, from a user perspective, an user 15 owning a Audi A4, logins into the application and exports his driver profile. He travels to a different country and would like to rent a vehicle 2, 3. He gets an Skoda Rapid and logins to the application. Then he will get the same user interface of Audi A4 in a Skoda Rapid car driving with his favorite music loaded. He is free to choose if the preferences from the Skoda car has to be included in his driving profile. Of course, for legacy issues, not all features from Audi will be covered by Skoda. The hardware limitations are indicated to the user 15.

This solution will be realized even when the user 15 switches to a newly bought vehicle 2, 3. If users 15 like the look and feel (GUI) of the old vehicle 2 but prefer a high performance new vehicle 3, simply they can switch to a new vehicle 3 and use this application to retain their user interface in the old vehicle 2.

It is not necessary that GUI developers needs to follow a common platform to realize this idea. GUI which are developed for a specific platform could be realized in a different platform using technology followed in emulators 21 and graphical engines 22.

Retrieving user preferences based on the driver profile might be an existing solution. In this patent, the focus is more on retrieving the user interface (GUI) to make sure that the driving experience of the user 15 (in terms of user interface) is not limited if he switches to a different vehicle manufacturer.

## Claims

1. Method to provide a user-specific user interface in a vehicle (2, 3) comprising the following steps performed by an external computing device (4):
- receiving (S3) a first user interface information (10) describing at least one design feature (11) of a first user interface provided to a user (15) in a first vehicle (2);
- storing (S4) the received first user interface information (10) in a user account (14) of the user (15);
- receiving (S6) a request information (18) describing a user-specific request for a user interface information (10, 20) for a second user interface in a second vehicle (3) wherein the second user interface differs from the first user interface so that the first user interface information (10) is unsuitable for the second user interface;
- by applying a user interface information creation algorithm (19) on the stored first user interface information (10) and the request information (18), creating (S7) a second user interface information (20) that describes the at least one design feature (11) according to the stored first user interface information (10) and is adapted to the second user interface; and
- providing (S8) the created second user interface information (20) to the second vehicle (3).

2. Method according to claim 1, wherein the first user interface information (10) describes at least one user-specific setting (12) for at least one function and/or service of the first vehicle (2) and/or user-specific data (13) stored in the first vehicle (2) and the created second user interface information (20) comprises the at least one user-specific setting (12) and/or user-specific data (13) adapted to the second user interface.

3. Method according to any one of the preceding claims, wherein the at least one design feature (11) describes a font, a color, a symbol and/or a position of at least one object on a display of the respective user interface.

4. Method according to any one of the preceding claims, wherein the user interface information generation algorithm (19) comprises at least one emulator (21) and at least one graphical engine (22).

5. System (1) to provide a user-specific user interface in a vehicle (2, 3) comprising a first vehicle (2), a second vehicle (3) and an external computing device (4), wherein the external computing device (4) is configured to:
- receive (S3) a first user interface information (10) describing at least one design feature (11) of a first user interface provided to a user (15) in the first vehicle (2);
- store (S4) the received first user interface information (10) in a user account (14) of the user (15);
- receive (S6) a request information (18) describing a user-specific request for a user interface information (10, 20) for a second user interface in the second vehicle (3), wherein the second user interface differs from the first user interface so that the first user interface information (10) is unsuitable for the second user interface;
- create (S7) a second user interface information (20) that describes the at least one design feature (11) according to the stored first user interface information (10) adapted to the second user interface by applying a user interface information creation algorithm (19) on the stored first user interface information (10) and the received request information (18); and
- provide (S8) the created second user interface information (20) to the second vehicle (3).

6. System (1) according to claim 5, wherein the first vehicle is configured to determine (S1) the first user interface information (10) by applying a user interface determination algorithm (8) on current user interface settings (9), which are in particular set by the user (15).

7. System (1) according to claim 6, wherein the first vehicle is configured to transmit (S2) the determined first user interface information (10) to the external computing device (4) via a communication connection (23) between the first vehicle (2) and the external computing device (4).

8. System (1) according to any one of the claims 5 to 7, wherein the external computing device (4) is configured to provide the created second user interface information (20) by transmitting it to the second vehicle (3) via a communication connection (23) between the external computing device (4) and the second vehicle (3).

9. System (1) according to any one of the claims 5 to 8, wherein the second vehicle (3) is configured to create (S10) a display on a display device (7) of the second vehicle (3) that comprises the at least one design feature (11) by processing the provided second user interface information (20).

10. System (1) according to any one of the claims 5 to 9, wherein the second vehicle (3) is configured to transmit (S5) the request information (18) to the external computing device (4) automatically after identifying the user (15) in the second vehicle (3) and/or in response to a manual activation.
